# EUROPEAN PATENT APPLICATION

(11) **EP 3 457 507 A1**
(43) Date of publication of application: **20.03.2019**
(21) Application number: 18195240.9
(22) Date of filing: 18.09.2018
(51) Int. Cl.: H02G 1/08, H02G 1/10, H02G 3/32, F16L 1/12

(54) **PROTECTION APPARATUS**

(30) Priority: 19.09.2017 GB 201715101
(71) Applicant: Advanced Insulation Limited, Gloucester, Gloucestershire GL2 4PA (GB)
(72) Inventor: VanHinsbergh, Greg, Gloucester, Gloucestershire GL2 4PA (GB); Harrop, Martin Steven, Gloucester, Gloucestershire GL2 4PA (GB)
(74) Representative: Sales, Robert Reginald

(57) **Abstract**

Protection apparatus 10 for preventing damage to an elongate flexible member such as a cable 12 when extending through an aperture 14 in an item 16. The apparatus 10 includes a profiled protective member 22 through which the cable 12 extends. The protective member 22 has a flange 28 inclined relative to a passage through the member 22. A locking arrangement 30 is provided for selectively locking the protective member to the item 16 around the aperture 14.

## Description

This invention concerns protection apparatus, and particularly protection apparatus for preventing damage to an elongate flexible member extending through an aperture in an item.

In a number of applications it is necessary for a flexible elongate member such as a cable to extend through an aperture in an item. It is desirable for the elongate member to be readily extendible through the aperture, but not to be damaged in use. This is particularly the case where the elongate member is likely to be caused to move relative to the item, such as for instance when located subsea. In such a location the elongate member may be subject to tidal and/or wave movement and other movement of the water, which potentially could cause the elongate member to be damaged, and particularly where it passes through the item.

Such applications can include cables extending into marine wind turbines, oil rigs or other such structures. A number of prior arrangements have been proposed, but these have often not provided sufficient protection to the elongate member. Also with such arrangements it has often been difficult to extend the elongate member therethrough. Furthermore, with such prior arrangements it is often difficult to subsequently remove the cable if required, due for instance to the difficulty in disassembling the protection apparatus. This is especially the case as often the protection apparatus is located inside the item.

According to a first aspect of the invention there is provided protection apparatus for preventing damage to an elongate flexible member extending through an aperture in an item, the apparatus including a protective member through which the elongate flexible member is extendible, the protective member including a flange arrangement which is locatable around the aperture on an external side of the item, and a locking arrangement including a locking member which is selectively movable between an unlocked position clear of the flange arrangement, and a locked position retaining the flange arrangement against the item around the aperture.

The protective member may be in the form of a sleeve. The flange arrangement may be inclined relative to the longitudinal direction of the sleeve, such that an elongate flexible member passes through the aperture at a required inclination.

The protective member may progressively reduce in thickness on an internal side in use of the flange arrangement, such that the flexibility of the protective member on an internal side increases away from the flange arrangement.

The protected member may be profiled so as to guide the elongate flexible member to a required alignment.

In a first arrangement, the locking member is slidably movable between the unlocked and locked positions.

The locking member may be slidably movable in a vertical direction between the unlocked and positions.

In one arrangement in the unlocked position the locking member is located above the aperture.

In a further arrangement in the unlocked position the locking member is located below the aperture, and retaining means may be provided for holding the locking member in the locked position.

A guide arrangement may be provided along which the locking member is slidably movable. The guide arrangement may comprise a spaced pair of elongate guide members. The guide arrangement may be mountable on the item.

In a second arrangement, the locking member is pivotally movable between the unlocked and locked positions.

In the unlocked position the locking member may be located above the aperture.

The locking member may be pivotally movable in use about a horizontal axis.

The locking member may have a generally n shaped configuration, with at least the side limbs of the n engageable against the flange arrangement of the protective member in a locked position. The locking member may be configured such that the cross piece of the n is engageable against the flange arrangement of the protective member in a locked position.

In the second arrangement, the locking member may be pivotally mounted about the cross piece of the n.

Latches may be provided for retaining the locking member in the unlocked and/or locked positions.

The latches may be remotely disengageable.

Embodiments of the present invention will now be described by way of example only and with reference to the accompanying drawings, in which:-
Fig. 1 is a diagrammatic perspective view of a first protection apparatus according to the invention in an unlocked position;
Fig. 2 is a similar view to Fig. 1 but with the protection apparatus in a locked position;
Fig. 3 is a diagrammatic side view of the apparatus of Fig. 1 in a locked condition;
Fig. 4 is a diagrammatic sectional side view of a second protection apparatus according to the invention in an unlocked position;
Fig. 5 is a similar view to Fig. 4 but with the second protection apparatus in a locked position;
Fig. 6 is a diagrammatic partially sectional view of the second protection apparatus illustrating the locked, unlocked and intermediate positions;
Fig. 7 is a diagrammatic perspective view of the apparatus of Fig. 5 in an unlocked position;
Fig. 8 is a similar view to Fig. 7 but with the second protection apparatus in a locked position; and
Fig. 9 is a diagrammatic perspective view of an alternative component of the protection apparatus according to the invention.

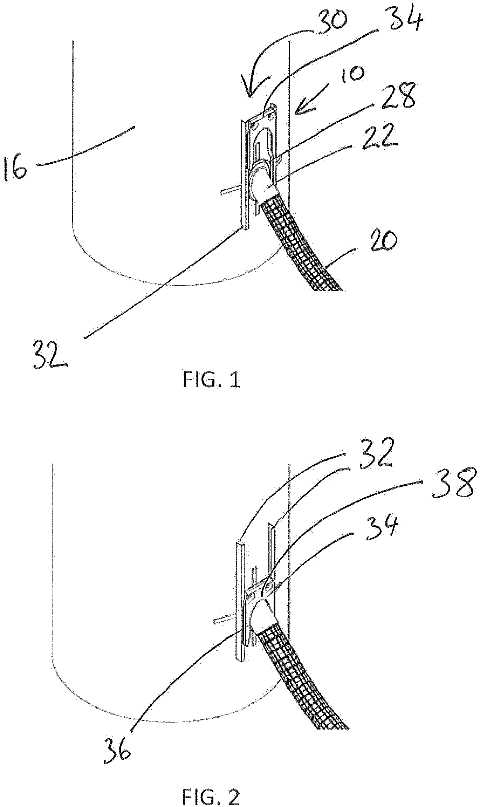

Figs. 1 to 3 show a first protection apparatus 10 for preventing damage to an elongate flexible member such as a cable 12 when extending through an aperture 14 in an item 16, such as for example the mast of a wind turbine, the leg of an oil rig, or similar. The cable 12 will extend across the sea bed 18 up through the aperture 14 into the item 16 and up to the turbine assembly or elsewhere. The cable 12 is shown with a bend restrictor 20 mounted thereon to limit the amount of bending and provide protection for the cable 12.

A protective member 22 is provided through which the cable 12 extends. The protective member 22 is in the form of an integral profiled member with a passage running therethrough which slidingly locates the cable 12. The protective member 22 has a uniform thickness at an outer end 24 in use, but tapers towards an inner end 26 in use, so as to be more flexible at the inner end 26. A flange 28 is provided on the protective member 22, between the inner and outer ends 26, 24, which flange 28 is inclined relative to the passage, to permit the protective member 22 to permit the cable 12 to be mounted at a required inclination.

A locking arrangement 30 is provided which provides a pair of inwardly facing parallel elongate guides 32 extending vertically on either side of the aperture 14 and thereabove. A locking member 34 is slidably located extending between the guides 32. The locking member 34 has a generally n shape configuration with side limbs 36 and a cross member 38 interconnecting the side limbs 36 at an upper end. The underside of the cross member 38 is arcuate.

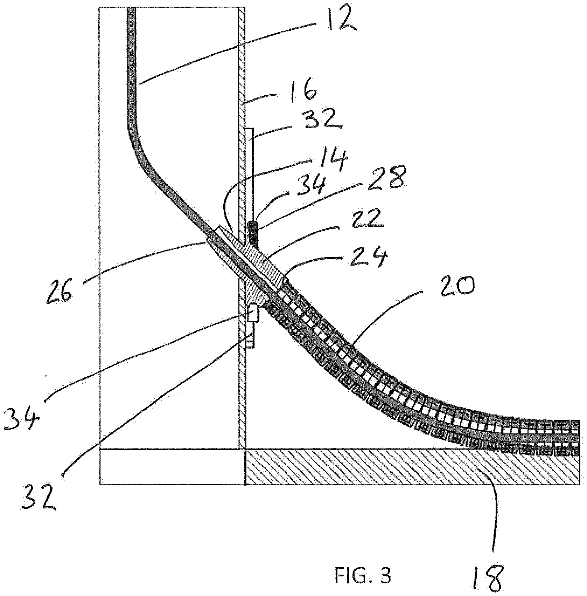

The locking member 34 is slidably movable between an unlocked position as shown in Fig. 1 located spaced above the aperture 14, and a locked position as shown in Fig. 2. With the protective member 22 extending through the aperture 14 until the flange 28 engages against the outside of the item 16 around the aperture 14. The locking member 34 can retain the protective member 22 and hence cable 12 in position, when in the locked position as shown in Figs. 2 and 3. As can be seen the side limbs 36 and arcuate underside of the cross member 38 cover the flange 28 on the outside of the item 16, to retain the protective member 22 in place on the item 16.

Latches (not shown) may be provided for retaining the locking member in the unlocked position, which catches could be remotely operable by a cable (also not shown) extendible away from the apparatus 10. Latches may be provided for retaining the locking member 34 in a locked position, though if the locking member is made of a sufficiently dense material, the locking member may remain in the locked position by gravity and not require retention in this position by a latch or otherwise.

A messenger line (not shown) extending to above the surface may be provided to enable control of the movement of the locking member 34 between the locked and unlocked positions. If it is needed to unlock the locking member 34 but this cannot be achieved using the messenger line, the locking member 34 and guides 32 could be sacrificed. For instance the locking member 34 could be attached to a ship's winch and pulled clear.

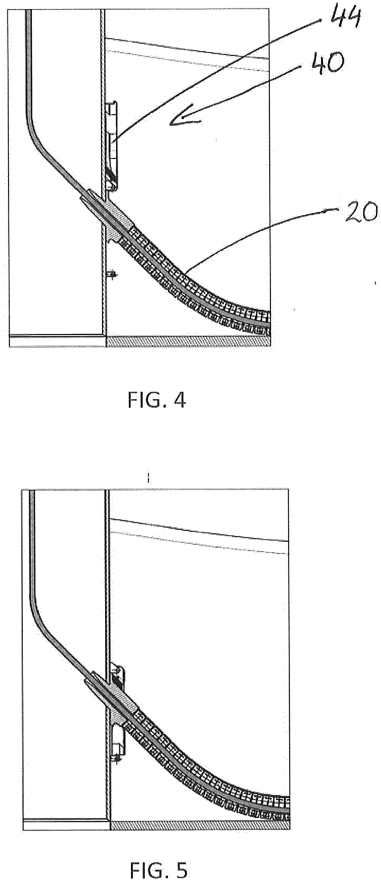

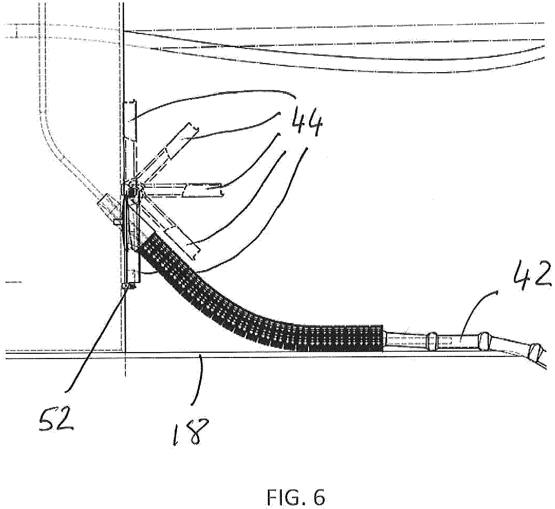

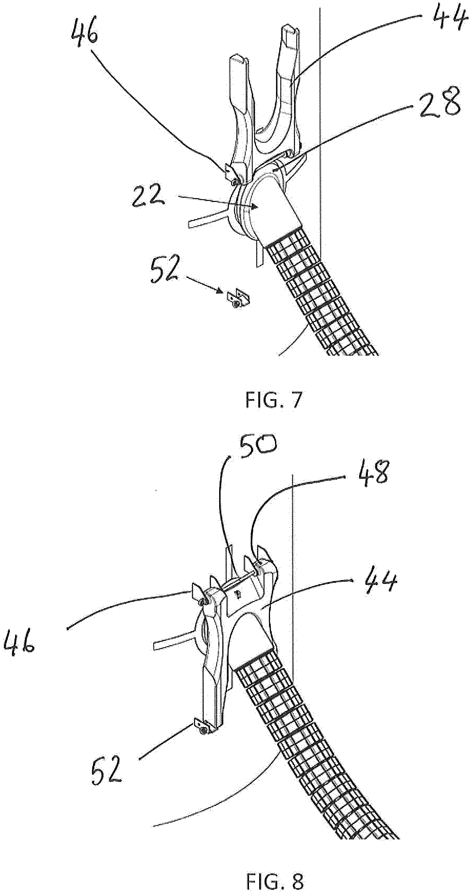

Figs. 4 to 8 show a second protection apparatus 40 again for protecting a cable 12 extending through an aperture 14. Again a bend restrictor 20 is provided on the external side of the cable 12, and in this instance the bend restrictor attaches to further cable protection 42, as shown in Fig. 6. The second protection apparatus 40 again includes an n shape locking member 44, again engageable with the flange 28 of the protective member 22. In this instance, the locking member 44 is however pivotally mounted to the item 16 between two pairs of spaced webs 46 extending outwardly from the item 16. Fingers 48 on the cross member of the locking member 44 locate between the respective webs with an axle 50 extending between the webs 46 through the fingers 48, permitting pivotal movement of the locking member 44 about the cross piece thereof.

In an unlocked position as shown in Fig. 4 the locking member 44 extends upwardly against the item 16, above the aperture 14. The locking member 44 can be pivoted downwardly to a locked position as shown for instance in Fig. 5, where the side limbs and cross member engage against the flange 28 on the protective member 22, to retain same in place. Fig. 6 illustrates the locked and unlocked positions of the locking member 44, including a number of intermediate positions.

A latch 52 is shown below the aperture 14 for retaining the locking member 44 in a locked position, and a pair of such latches 52 would probably be provided, engageable respectively with the side limbs of the locking member 44. Again, if the locking member 44 is made of a sufficiently dense material, it may not be required to provide such latches 52. Similar latches 52 may be provided above the aperture 14, again engageable with the side limbs of the locking member 44, when in an unlocked position, to retain the locking member 44 in the unlocked position. The latches 52 may be remotely operable by appropriate cables extending therefrom.

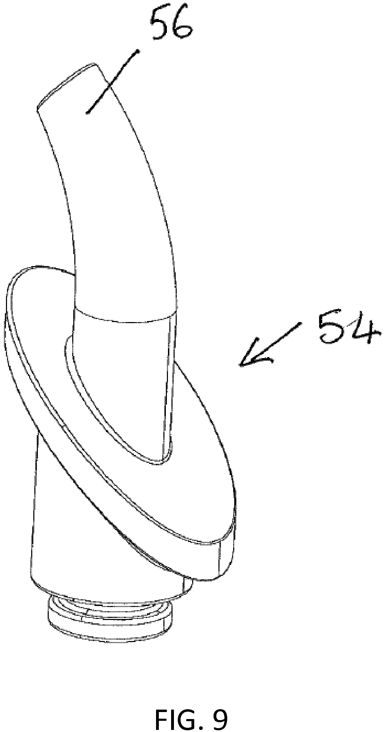

Fig. 9 shows a further protective member 54, which in this instance has a profiled inner end 56, to provide the cable 12 inside of the item 16 at a required position, and inclination.

There thus provides protection apparatus which readily permits a cable to be mounted in position extending into an item, whilst providing significant protection to the cable. The apparatus can also readily be located in place and actuated to retain a protective member in place. The apparatus can also be readily disengaged if required for instance for removal or adjustment of the cable, or protective member.

In an alternative arrangement, the locking member is slidable upwards from an unlocked position to a locked position engaging with the protective member. A messenger line extending to the surface may be provided for moving the locking member. The messenger line can be locked or otherwise restrained to hold the locking member in a locked position.

Various other modifications may be made without departing from the scope of the invention. For instance, with a sliding locking member, the sliding member could be slidable laterally. Alternatively, the sliding member could be located below the aperture in an unlocked position, and be slid upwardly to a locked position. In this instance, the locking member would have a U shape. The protective member may take a different form. Different latching arrangements may be provided as deemed appropriate for any particular application.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. Protection apparatus for preventing damage to an elongate flexible member extending through an aperture in an item, the apparatus including a protective member through which the elongate flexible member is extendible, the protective member including a flange arrangement which is locatable around the aperture on an external side of the item, and a locking arrangement including a locking member which is selectively movable between an unlocked position clear of the flange arrangement, and a locked position retaining the flange arrangement against the item around the aperture.

2. Protection apparatus according to claim 1, **characterised in that** the protective member is in the form of a sleeve.

3. Protection apparatus according to claim 2, **characterised in that** the flange arrangement is inclined relative to the longitudinal direction of the sleeve, such that an elongate flexible member passes through the aperture at a required inclination.

4. Protection apparatus according to claims 2 or 3, **characterised in that** the protective member progressively reduces in thickness on an internal side in use of the flange arrangement, such that the flexibility of the protective member on an internal side increases away from the flange arrangement.

5. Protection apparatus according to any of the preceding claims, **characterised in that** the locking member is slidably movable between the unlocked and locked positions.

6. Protection apparatus according to claim 5, **characterised in that** the locking member is slidably movable in a vertical direction between the unlocked and positions, and the locking member may be located above the aperture.

7. Protection apparatus according to claims 5 or 6, **characterised in that** a guide arrangement is provided along which the locking member is slidably movable.

8. Protection apparatus according to claim 7, **characterised in that** the guide arrangement comprises a spaced pair of elongate guide members.

9. Protection apparatus according to any of claims 1 to 4, **characterised in that** the locking member is pivotally movable between the unlocked and locked positions.

10. Protection apparatus according to claim 9, **characterised in that** in the unlocked position the locking member is located above the aperture.

11. Protection apparatus according to claim 9 or 10, **characterised in that** the locking member is pivotally movable in use about a horizontal axis.

12. Protection apparatus according to any of the preceding claims, **characterised in that** the locking member has a generally n shaped configuration, with at least the side limbs of the n engageable against the flange arrangement of the protective member in a locked position.

13. Protection apparatus according to claim 12, **characterised in that** the locking member is configured such that the cross piece of the n is engageable against the flange arrangement of the protective member in a locked position.

14. Protection apparatus according to claims 12 or 13 when dependent on claim 11, **characterised in that** the locking member is pivotally mounted about the cross piece of the n.

15. Protection apparatus according to any of the preceding claims, **characterised in that** latches are provided for retaining the locking member in the unlocked and/or locked positions, and the latches may be remotely disengageable.
